# EUROPEAN PATENT APPLICATION

(11) **EP 1 748 234 A1**
(43) Date of publication of application: **31.01.2007**
(21) Application number: 06014662.8
(22) Date of filing: 14.07.2006
(51) Int. Cl.: F16K 5/06, B01D 35/04

(54) **Valve body for hydraulic systems**

(30) Priority: 26.07.2005 IT MI20050272 U
(71) Applicant: Effebi S.p.A., 25073 Bovezzo BS (IT)
(72) Inventor: Tanghetti, Ermanno, 25073 Bovezzo (BS) (IT)
(74) Representative: Marietti, Giuseppe

(57) **Abstract**

The invention relates to a valve body (11) for hydraulic systems comprising a seat (12) for an on-off valve (15), a seat (13) for a filter (20), and a seat (14) for a check valve (24).

## Description

The present application relates to a valve body for controlling liquid streams, generally water, in hydraulic systems, such as heating systems and the like.

In these types of systems, in addition to an on-off valve, a ball valve, either manually operable or not, is, for example, even though not necessarily, often required to be installed along with a filter for the flowing liquid, and a check valve (i.e. a nonreturn valve) ensuring that the liquid flows in only one direction throughout the system, or however, preventing undesired backflow.

The installation of these components implies a non negligible work when the system is being set up, as well as the division of the involved tubing into several parts.

With the aim of reducing this effort, the Applicant has already proposed a valve body for the uses as illustrated above, which comprises a seat for the on-off valve and a seat for the filter. However, this solution also requires a check valve to be separately fitted.

In order to solve even this problem, a valve body is provided according to the present invention, which is characterized according to claim 1, the main constructive details thereof being set forth in the dependent claims.

An embodiment of the present invention is accordingly illustrated, by way of example, in the annexed drawing, in which:

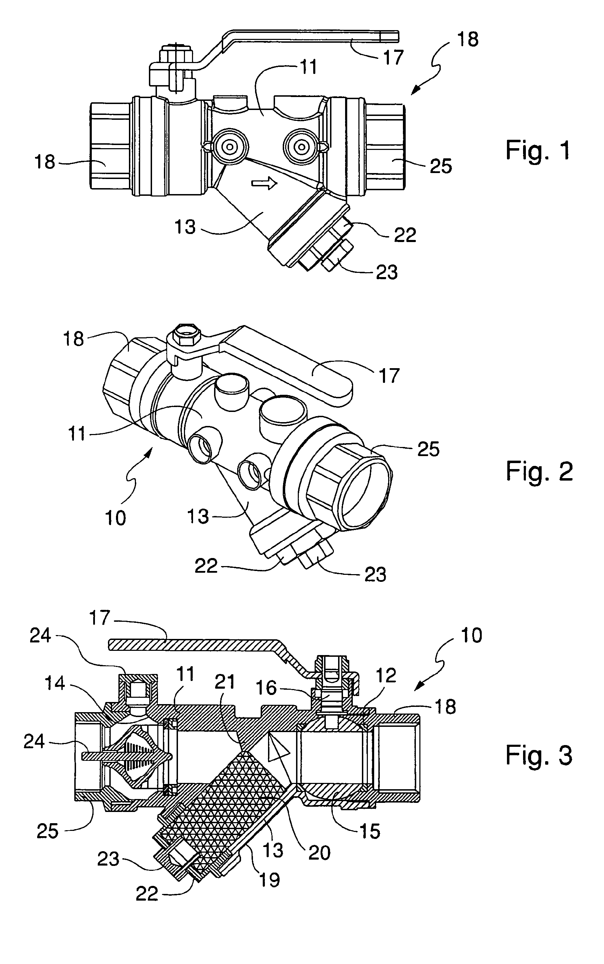

- Fig. 1 is a side view of the valve body according to the invention;
- Fig. 2 is a perspective view of the same valve body;
- Fig. 3 is an axial section of the latter.

With reference to the figures, the valve body 10 illustrated therein consists of either one single piece 11, or several pieces being permanently fastened to each other, which defines three different seats therein, i.e. a seat 12 for an on-off valve, a seat 13 for a filter , and a seat 14 for a check valve. The seat 12 for the on-off valve is suitable to house for example a known ball valve 15 having a tang 16 to be operated, for example by hand, by means of an operating lever 17 or a non-manual mechanism.

The valve seat 12 is closed, after the ball 15 has been installed, by means of a sleeve 18, which is tightened and then sealed.

After the valve seat 12, the body 11 has a laterally inclined part 19 being the seat 13 for a filter 20 to be fitted therein to an inner abutment 21, which defines the operating position for the filter 20, such that the latter is passed through by the liquid when the on-off valve 15 is open. The filter 20 is held within its housing 13 by a lid 22 which is, for example, sealingly tightened to allow the removal of filter 20. A drain plug 23 is further mounted to the lid 22.

Finally, a third seat 14 coaxial with the seat 12 of the on-off valve 15 is also provided on the valve body 11, which third seat houses a check valve 24, known per se, which is held in position by a tightened and sealed nut 25. The body 11 can have, at the seat 14, a closable opening 24 for draining and discharging the system, or for applying a pressure manometer or other control equipment.

## Claims

1. A valve body for controlling liquid flow in sanitary systems, **characterized in that** it comprises, as a single body, a seat for an on-off valve, a seat for a filter and a seat for a check valve.

2. The valve body according to claim 1, **characterized in that** it has two aligned seats for the on-off and check valves, and a seat arranged at an angle relative to said alignment, for housing a filter.

3. The valve body according to claim 1 or 2, **characterized in that** the seat of the on-off valve is shaped such as to house a ball valve element that can be controlled from the outside.

4. The valve body according to one of the preceding claims, **characterized in that** the filter seat is provided with a sealing closure lid to be opened from the outside.

5. The valve body according to claim 2 or 4, **characterized in that** the filter seat has an inner abutment for the filter, which defines an operating position for the filter, in which the latter is passed through by the hydraulic flow.

6. The valve body according to claim 4 or 5, **characterized in that** the closure lid for the filter seat is provided with a drain plug.

7. The valve body according to at least one of the preceding claims, **characterized in that** the seat for the check valve includes an opening that can be sealingly closed and opened for draining or discharging the system or for connection to pressure control means.

8. The valve body according to one or more of the preceding claims, **characterized in that** the seats for the on-off and check valves are closed after the valve bodies have been installed, each by means of a permanently fixed sleeve.
